# EUROPÄISCHE PATENTSCHRIFT

(11) **EP 1 636 403 B1**
(45) Veröffentlichungstag und Bekanntmachung des Hinweises auf die Patenterteilung: **11.08.2010**
(21) Anmeldenummer: 04735737.1
(22) Anmeldetag: 02.06.2004
(51) Int. Cl.: C25D 13/22

(54) **ELEKTROPHORETISCHE TAUCHLACKIERANLAGE**
ELECTROPHORETIC DIPPING SYSTEM
INSTALLATION DE PEINTURE ELECTROPHORETIQUE PAR IMMERSION

(30) Priorität: 06.06.2003 DE 10325656
(43) Veröffentlichungstag der Anmeldung: 22.03.2006
(73) Patentinhaber: EISENMANN Anlagenbau GmbH & Co. KG, 71032 Böblingen (DE)
(72) Erfinder: VON KAPHENGST, Hans, Kaspar, 72135 Dettenhausen (DE); MAI, Werner, 71093 Weil im Schönbuch (DE); RAABE, Bernd, 99448 Kranichfeld (DE); EBBINGHAUS, Marco, 42659 Solingen (DE)
(74) Vertreter: Ostertag, Ulrich
(86) Internationale Anmeldenummer: PCT/EP2004/005926
(87) Internationale Veröffentlichungsnummer: WO 2004/108996

(56) Entgegenhaltungen:
- EP-A- 1 020 982
- DE-A- 1 804 107
- DE-A- 19 942 556
- FR-A- 1 535 479
- FR-A- 1 591 627
- GB-A- 1 233 435
- US-A- 5 494 561
- US-A1- 2003 102 845
- US-B1- 6 197 179
- PATENT ABSTRACTS OF JAPAN Bd. 0173, Nr. 94 (C-1088), 23. Juli 1993 (1993-07-23) & JP 5 070998 A (KANSAI PAINT CO LTD), 23. März 1993 (1993-03-23)

## Beschreibung

Die Erfindung betrifft eine elektrophoretische Tauchlackieranlage mit
a) mindestens einem Tauchbecken, welches mit einer Lackflüssigkeit füllbar und in welches ein zu lackierender Gegenstand eintauchbar ist;
b) mindestens einer im Tauchbecken angeordneten Elektrode einer ersten Polarität;
c) mindestens einer Stromversorgungseinheit, die aus einer Wechselspannung eine Gleichspannung bestimmter Restwelligkeit erzeugt, deren einer Pol mit der Elektrode erster Polarität und deren anderer Pol mit dem zu lackierenden Gegenstand verbindbar ist und die ein Glättungsglied zur Verringerung der Restwelligkeit aufweist.

Derartige elektrophoretische, im allgemeinen kataphoretische Tauchlackieranlagen sind vom Markt her bekannt. Sie müssen eine geglättete Gleichspannung abgeben können, deren Höhe zur Anpassung an die jeweiligen Gegebenheiten variabel ist. In den wenigsten Fällen wird den Stromversorgungseinheiten über längere Zeit die maximal mögliche Gleichspannung abverlangt. Sehr viel häufiger sind die Fälle und sehr viel länger sind die Zeitspannen, in denen eine gegenüber der Maximalspannung abgesenkte Gleichspannung benötigt wird. Die bekannten Stromversorgungseinheiten weisen zur Erzeugung der Gleichspannung Thyristor-Brückenschaltungen auf. Diese werden nach einem Phasenanschnittverfahren so angesteuert, daß sich nach der Glättung die jeweils gewünschte Größe der Gleichspannung einstellt. Dokument US 6,197,179 stellt eine Offenbarung dieser Art dar. Hiermit sind verschiedene Nachteile verbunden. Zum einen hat die direkt von der Thyristor-Brückenschaltung erzeugte Ausgangsspannung eine sehr hohe Welligkeit mit der Frequenz der Wechselspannung, aus der sie erzeugt wurde. Die Glättungsglieder, die zur Glättung dieser Spannung benötigt werden, erfordern sehr große Glättungsdrosseln, die nicht nur teuer sondern auch sehr schwer sind und viel Platz einnehmen. Trotz Verwendung derartig aufwendiger Glättungsglieder verbleibt in den bekannten kataphoretischen Tauchlackieranlagen eine nicht unerhebliche Restwelligkeit der zwischen der Anode und den zu lackierenden Gegenständen liegenden Spannung, was sich nachteilig auf das erzielte Lackbild auswirkt. Zudem wird die Standfestigkeit der Dialysezellen, die im allgemeinen die im Tauchlackbecken angeordneten Anoden umgeben, beeinträchtigt. Hinzu kommt, daß der cos Φ dieser bekannter Stromversorgungseinheiten vergleichsweise klein ist.

Aufgabe der vorliegenden Erfindung ist es, eine elektrophoretische Tauchlackieranlage der eingangs genannten Art so auszugestalten, daß die Ausgangsspannung der Stromversorgungseinheit mit geringem schältungstechnischem Aufwand eine geringe Restwelligkeit besitzt.

Diese Aufgabe wird erfindungsgemäß dadurch gelöst, daß
d) die Stromversorgungseinheit umfasst:
   da) eine ungesteuerte Dioden-Gleichrichterbrücke;
   db) eine IGBT-Schaltung, die ihrerseits einen steuerbaren Oszillator, der mit einer Wiederholfrequenz im Bereich zwischen 5 und 30 kHz Impulse mit variabler Impulsbreite erzeugt, sowie einen von den Impulsen des Oszillators angesteuerten Leistungstransistor aufweist.

Erfindungsgemäß werden zur Erzeugung der erforderlichen Gleichspannung also keine Thyristor-Brückenschaltungen mehr eingesetzt. Vielmehr findet eine Schaltungsanordnung Verwendung, die in ähnlicher Ausgestaltung bei Galvanisierungsvorgängen bereits eingesetzt wird. Dort allerdings sind die zur Anwendung kommenden Spannungen und Leistungen sehr viel kleiner als in elektrophoretischen Tauchlackieranlagen. Der Kerngedanke bei derartigen Stromversorgungseinrichtungen besteht darin, eine Impulsbreitenmodulation der von einer ungesteuerten Dioden-Gleichrichterbrücke erzeugten, ggfs. vorgeglätteten Spannung herbeizuführen und zwar mit einer verhältnismäßig hohen Frequenz, die weit über der Netzfrequenz liegt. Die so erzeugten Impulse können mit verhältnismäßig kleinen LC-Gliedern bis auf eine verschwindend kleine Restwelligkeit geglättet werden. Die Größe der geglätteten Ausgangsspannung derartiger Stromversorgungseinheiten ist direkt proportional zum Tastverhältnis der von dem Leistungstransistor abgegebenen Spannungsimpulse. Die geringe Restwelligkeit der geglätteten Spannung, die das zum elektrophoretischen Lackieren erforderliche elektrische Feld zwischen Elektrode und Gegenstand aufbaut, ist so klein, daß sich ein erheblich besseres Lackbild, insbesondere eine glattere Oberfläche, ergibt; dies bei erheblich reduzierten Größen der verwendeten Glättungsdrosseln. Die geringere Restwelligkeit wirkt sich auch positiv auf die Standzeit der Dialysezellen aus.

Vorzugsweise liegt die Wiederholfrequenz des Oszillators bei etwa 20 kHz. Bei dieser Freqzenz lassen sich auch Leistungstransistoren noch problemlos betreiben; sie liegt außerdem so hoch, daß die Glättung der erzeugten Rechteckimpulse keine Schwierigkeiten bereitet.

Vorteilhaft ist, wenn die Dioden-Gleichrichterbrücke sechs Dioden zur Vollwellen-Gleichrichtung der drei Phasen eines Drehstromes aufweist.

Im allgemeinen werden die zu lackierenden Gegenstände mit Hilfe eines Fördersystemes an das Tauchbecken herangeführt, in dieses eingetaucht, durch das Tauchbecken hindurchbewegt, aus diesem herausgehoben und sodann zur weiteren Bearbeitung fortgeführt. In diesem Falle empfiehlt sich eine Ausgestaltung der Erfindung, bei welcher mehrere normalerweise galvanisch voneinander getrennte, in Förderrichtung hintereinander liegende Bereiche vorgesehen sind, die jeweils eine Stromversorgungseinheit, eine mit dem Gegenstand in dem fraglichen Bereich in elektrischem Kontakt stehende und mit dem einen Pol der Stromversorgungseinheit verbundene Stromschiene und mindestens eine Elekktrode der ersten Polarität aufweist. Die Unterteilung der Gesamtanlage in hintereinander liegende, individuell elektrisch betreibbare Bereiche ermöglicht es, die elektrischen Felder örtlich an den fortschreitenden Aufbau der Lackschicht auf den Gegenständen anzupassen, beispielsweise in Förderrichtung zu erhöhen. Durch die galvanische Trennung der einzelnen Bereiche können unerwünschte Wechselwirkungen in den Übergangsbereichen vermieden werden.

Wenn in einem solchen Falle die Stromschiene benachbarter Bereiche beim Wechsel der Gegenstände von einer Stromschiene zur anderen elektrisch miteinander verbindbar sind, bleiben die Spannungsverhältnisse bei diesem Wechsel der Gegenstände stets definiert.

Besonders variabel, insbesondere auch im Falle eines Defektes einer Stromversorgungseinheit, ist diejenige Ausgestaltung der Erfindung, bei welcher jede Stromversorgungseinheit wahlweise mit jeder Elektrode der ersten Polarität in allen Bereichen verbindbar ist. Fällt dann eine Stromversorgungseinheit auf Grund eines Defektes aus, kann mit Hilfe einer anderen Stromversorgungseinheit zumindest ein Notbetrieb aufrecht erhalten werden.

Wesentlich bessere Lackierergebnisse insbesondere an den Innenflächen von Hohlkörpern lassen sich erzielen, wenn mindestens einer Stromversorgungseinheit ein Impulsformer nachgeschaltet ist, der aus der geglätteten Ausgangsspannung der Stromversorgungseinheit eine Folge von Rechteckimpulsen erzeugt. Dadurch läßt sich die Wirkung elektrisch leitender Hohlkörper als Faraday'scher Käfig, welche ein Eindringen statischer elektrischer felder in den Innenraum verhindern würde, weitgehend ausschalten.

Günstig dabei ist, wenn die Wiederholfrequenz der Rechteckimpulse zwischen 1 und 10 kHz, bevorzugt bei 5 kHz, liegt.

Ein Ausführungsbeispiel der Erfindung wird nachfolgend anhand der Zeichnung näher erläutert; es zeigen
- Figur 1: schematisch eine Gesamtschaltungsanordnung für eine kataphoretische Tauchlackieranlage;
- Figur 2: das Schaltbild einer Stromversorgungseinheit, wie sie in der Anlage von Figur 1 Verwendung findet;
- Figur 3: eine Impulsfolge, wie sie von der Stromversor- gungseinheit der Figur 2 abgegeben wird;
- Figur 4: einen Impulsformer, welcher der in Figur 2 dargestellten Stromversorgungseinheit nachge- schaltet werden kann;
- Figur 5: eine Impulsfolge, wie sie von dem in Figur 5 dargestellten Impulsformer abgegeben wird.

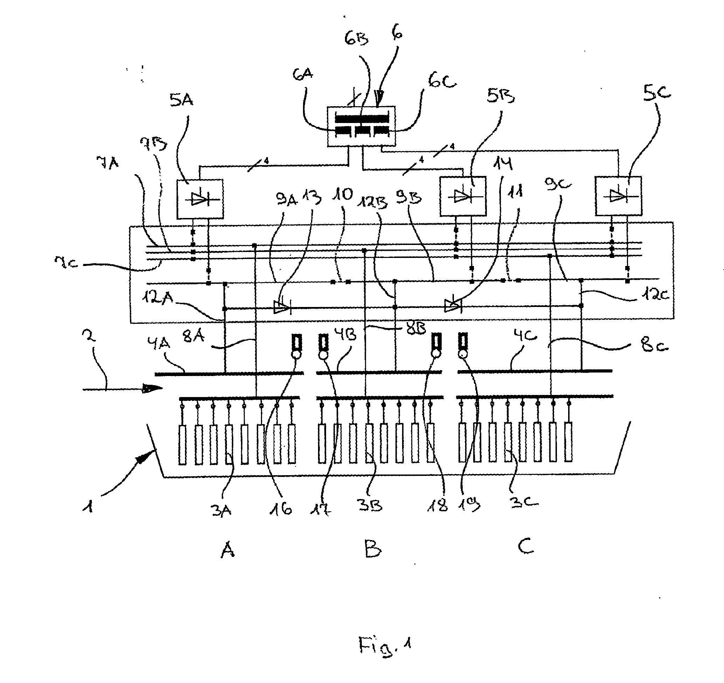

Zunächst wird auf Figur 1 Bezug genommen. In dieser ist ein Tauchbecken mit dem Bezugszeichen 1 gekennzeichnet, das im Betrieb mit einer Lackflüssigkeit angefüllt ist. In dieses Tauchbecken 1 werden die zu lackierenden Gegenstände, beispielsweise Fahrzeugkarosserien, eingetaucht. Dies kann sowohl in einem kontinuierlichen Durchlaufverfahren geschehen, wozu die zu lackierenden Gegenstände an einem Förderer angebracht sind, der sie in das Tauchbecken 1 hinein, durch das Tauchbecken 1 hindurch und aus dem Tauchbecken 1 wieder herausführt. Alternativ ist es aber auch möglich, die Gegenstände in dem Tauchbecken 1 in einem Takt-Tauchverfahren zu lackieren. Zu Zwecken der nachfolgenden Beschreibung wird von einem kontinuierlichen Durchlaufverfahren ausgegangen; die Bewegungsrichtung der zu lackierenden Gegenstände ist mit dem Pfeil 2 gekennzeichnet.

Zur Abscheidung der in der Lackflüssigkeit enthaltenen Lackteilchen, also z.B. der Pigment-, Bindemittel und Füllstoffteilchen, werden die Oberflächen der Gegenstände bei ihrem Durchgang durch das Tauchbecken 1 auf das Kathodenpotential eines elektrischen Feld gelegt, das zwischen einer Vielzahl von Anoden 3 und den Oberflächen der Gegenstände aufgebaut wird. In diesem elektrischen Feld wandern die Lackteilchen auf die Gegenstände zu und lagern sich an deren Oberflächen an.

Die Gesamtanordnung, mit welcher das genannte elektrische Feld in dem Tauchbecken 1 erzeugt wird, ist in drei voneinander galvanisch getrennte Bereiche A, B und C unterteilt. Der Bereich A stellt einen Einlaufbereich, der Bereich B einen Hauptbereich und der Bereich C einen Auslaufbereich dar. Jeder Bereich A, B, C umfasst eine Gruppe von benachbart dem Bewegungsweg der Gegenstände angeordneten Anoden 3A, 3B bzw. 3C, die jeweils parallel geschaltet sind. Jeder Bereich A, B, C weist zudem eine Stromschiene 4A, 4B, 4C auf, die Kathodenpotential führt und mit welcher die Gegenstände ständig durch einen geeigneten Schleifkontakt in Verbindung stehen. Jedem Bereich A, B, C ist schließlich eine eigene Stromversorgungseinheit 5A, 5B, 5C zugeordnet, deren Minuspol mit der Stromschiene 4A, 4B, 4C und über diese letztendlich mit dem zu lackierenden Gegenstand und deren Pluspol mit der jeweiligen Gruppe von Anoden 3A, 3B, 3C verbunden ist. Die drei Stromversorgungseinheiten 5A, 5B, 5C werden jeweils von einer Sekundärspule 6A, 6B, 6C eines Drehstrom-Transformators 6 gespeist.

Die Verbindung zwischen den Stromversorgungseinheiten 5A, 5B, 5C und den Anodengruppen 3A, 3B, 3C erfolgt über eine Gruppe von drei Leitungen 7A, 7B, 7C, die sich über die gesamte Länge des Tauchbeckens 1 erstrecken. Jede Stromversorgungseinheit 5A, 5B, 5C kann wahlweise mit jeder Leitung 7A, 7B, 7C verbunden werden. Der normale Betriebszustand ist jedoch der, daß die Stromversorgungseinheit 5A mit der Leitung 7A, die Stromversorgungseinheit 5B mit der Leitung 7B und die Stromversorgungseinheit 5C mit der Leitung 7C verbunden ist.

Die Leitung 7A ist über eine Zweigleitung 8A mit der Anodengruppe 3A, die Leitung 7B über eine Zweigleitung 8B mit der Anodengruppe 3B und die Leitung 7C über eine Zweigleitung 8C mit der Anodengruppe 3C verbunden. Die Anordnung ist also so, daß bei Bedarf, etwa in einem Notbetrieb beim Ausfall einer Stromversorgungseinheit 5A, 5B oder 5C, jede Anodengruppe 3A, 3B, 3C von jeder Stromversorgungseinheit 5A, 5B, 5C aus mit Anodenspannung versorgt werden kann.

Der Pluspol jeder Stromversorgungseinheit 5A, 5B, 5C kann mit jeweils einem zugeordneten Leitungsabschnitt 9A, 9B, 9C verbunden werden, der sich entlang der Bewegungsrichtung (Pfeil 2) der Gegenstände erstreckt. Normalerweise sind die Leitungsabschnitte 9A, 9B, 9C galvanisch voneinander getrennt. Sie können jedoch bei Bedarf mit Hilfe von Schaltern 10, 11 mit einander verbunden werden. Von den Leitungsabschnitten 9A, 9B, 9C verlaufen jeweils Zweigleitungen 12A, 12B, 12C zu den entsprechenden Stromschienen 4A, 4B, 4C. Auch für die Bestromung der Stromschienen 4A, 4B, 4C gilt somit, daß diese wahlweise von jeder der Stromversorgungseinheiten 5A, 5B, 5C aus erfolgen kann, daß normalerweise aber die Stromversorgungseinheit 5A der Stromschiene 4A, die Stromversorgungseinheit 5B der Stromschiene 4B und die Stromversorgungseinheit 5C der Stromschiene 4C zugeordnet ist.

Die Zweigleitungen 12A und 12B sind durch einen steuerbaren Thyristor 13 und die Zweigleitungen 12B und 12C über einen steuerbaren Thyristor 14 miteinander verbunden. Die Thyristoren 13, 14 sind normalerweise gesperrt, so daß die galvanische Trennung zwischen den Stromschienen 4A, 4B und 4C erhalten bleibt.

In der Nähe der Unterbrechungen, welche die Stromschienen 4A und 4B sowie die Stromschienen 4B und 4C von einander galvanisch trennen, sind entlang des Bewegungsweges der Gegenstände Anwesenheitssensoren 16, 17, 18, 19 angeordnet. Diese stellen fest, wenn sich ein Gegenstand an der fraglichen Stelle befindet, und lösen ein Signal zur Ansteuerung der Thyristoren 13, 14 aus, wie dies nachfolgend näher beschrieben wird.

Die Funktion der oben beschriebenen Tauchlackieranlage ist wie folgt:
Im Normalbetrieb nähern sich Gegenstände, die in dem Tauchbecken 1 lackiert werden sollen, im Sinne des Pfeiles 2 und werden in dieses eingetaucht. Durch entsprechende Kontaktiereinrichtungen werden sie zunächst mit der Stromschiene 4A verbunden und geraten innerhalb der Lackflüssigkeit in das zwischen der Anodengruppe 3A und ihrer Oberfläche sich aufbauende elektrische Feld. Die Abscheidung von Lackteilchen auf den Oberflächen der Gegenstände beginnt. Nähert sich der Gegenstand dem Ende der Anodengruppe 3A und gerät somit in den Erfassungsbereich des Anwesenheitssensors 16, so wird der Thyristor 13 durchgeschaltet, welcher die beiden Stromschienen 4A und 4B miteinander verbindet. Erreicht der Gegenstand den Erfassungsbereich des Anwesenheitssensors 17, so wird der Thyristor 13 wieder gesperrt. Die beiden Stromschienen 4A und 4B sind also nur während des Überganges der Gegenstände von der Stromschiene 4A zur Stromschiene 4B auf gleiches Potential geschaltet.

Der Gegenstand bewegt sich nunmehr in dem elektrischen Feld, das zwischen der Stromschiene 4B und damit seiner Oberfläche einerseits und der Anodengruppe 3B aufgebaut wird, durch die Lackflüssigkeit. Im allgemeinen ist dieses elektrische Feld größer als dasjenige im Einlaufbereich A. In diesem Hauptbereich B wird der Großteil der Lackschichtdicke auf den Oberflächen des Gegenstandes abgeschieden. Erreicht der Gegenstand den Anwesenheitssensor 18, so wird der Thyristor 14 durchgeschaltet, so daß die Stromschienen 4B und 4C mit einander verbunden sind. Diese Verbindung wird so lange aufrecht erhalten, bis der Gegenstand den Erfassungsbereich des Anwesenheitssensors 19 erreicht hat und dann wieder unterbrochen. Im Auslaufbereich C ist dann im allgemeinen das elektrische Feld erneut etwas größer als in den vorausgegangenen Bereichen A, B, wobei die Dicke der abgeschiedenen Lackschicht auf den Gegenständen auf ihren endgültigen Wert gebracht wird. Die Gegenstände verlassen dann das Tauchbecken 1 und werden in bekannter Weise weiter bearbeitet.

Fällt beispielsweise die Stromversorgungseinheit 5A aus, kann ein Notbetrieb dadurch aufrecht erhalten werden, daß eine der anderen Stromversorgungseinheiten 5B, 5C die Funktion der ausgefallenen Stromversorgungseinheit 5A mit übernimmt. Hierzu wird die Stromversorgungseinheit 5A von der Leitung 7A und von dem Leitungsabschnitt 9A getrennt. Zwischen beispielsweise der Stromversorgungseinheit 5B und der Leitung 7A wird eine (zusätzliche) Verbindung hergestellt. Gleichzeitig wird der Schalter 10 geschlossen. Die Bereiche A und B werden auf diese Weise elektrisch parallel betrieben. Dies kann so lange geschehen, bis die Stromversorgungseinheit 5A wieder in Ordnung gebracht ist.

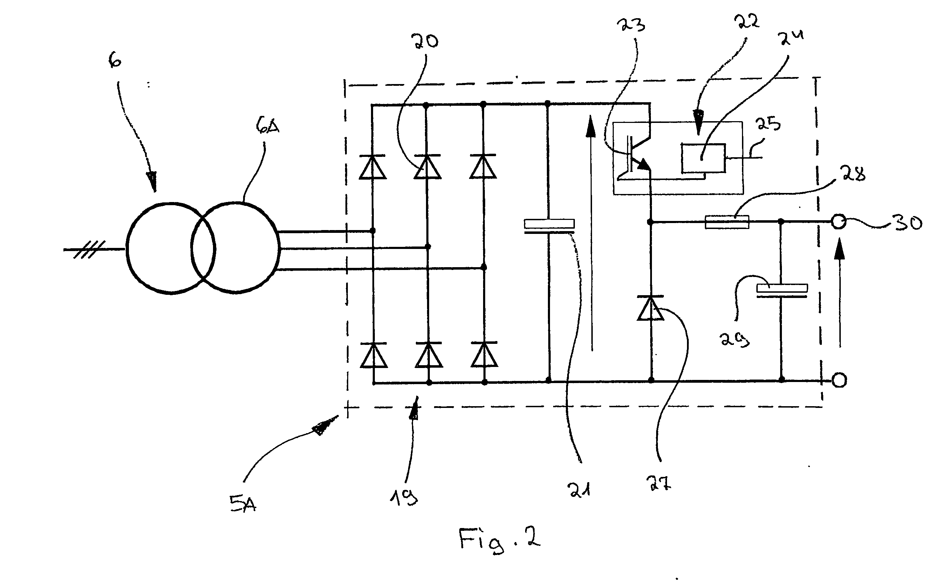

Alle Stromversorgungseinheiten 5A, 5B und 5C sind in grundsätzlich derselben Weise aufgebaut. Die Schaltungsanordnung der Stromversorgungseinheit 5A ist in Figur 2 dargestellt, auf die nunmehr Bezug genommen wird.

In Figur 2 sind der Drehstromtransformator 6, dem Netzspannung zugeführt wird, und die der Stromversorgungseinheit 5A zugeordnete Sekundärwicklung 6A wiederzuerkennen. Die drei jeweils um 120° phasenverschobenen Spannungsphasen, die von der Sekundärwicklung 6A erzeugt werden, werden einer ungesteuerten Brückenschaltung 19 zugeführt, die in der dargestellten Weise sechs Dioden 20 umfasst. Dem Ausgang der Brückenschaltung 19 ist ein Kondensator 21 parallel geschaltet, der die Ausgangsspannung der Brückenschaltung 19 vorglättet.

Diese Ausgangsspannung wird einer an und für sich bekannten IGBT-Schaltung 22 zugeführt. Diese umfasst mindestens einen steuerbaren Leistungstransistor 23 sowie einen Oszillator 24, der Rechteckimpulse mit verhältnismäßig hoher Frequenz, beispielsweise mit einer Wiederholfreqzenz von 20 kHz, erzeugt. Die Breite der Rechteckimpulse und damit das Tastverhältnis ist über einen Steueranschluß 25 des Oszillators 24 veränderbar. Die Rechteckimpulse des Oszillators 24 werden dem Steuereingang des Leistungstransistors 23 zugeführt.

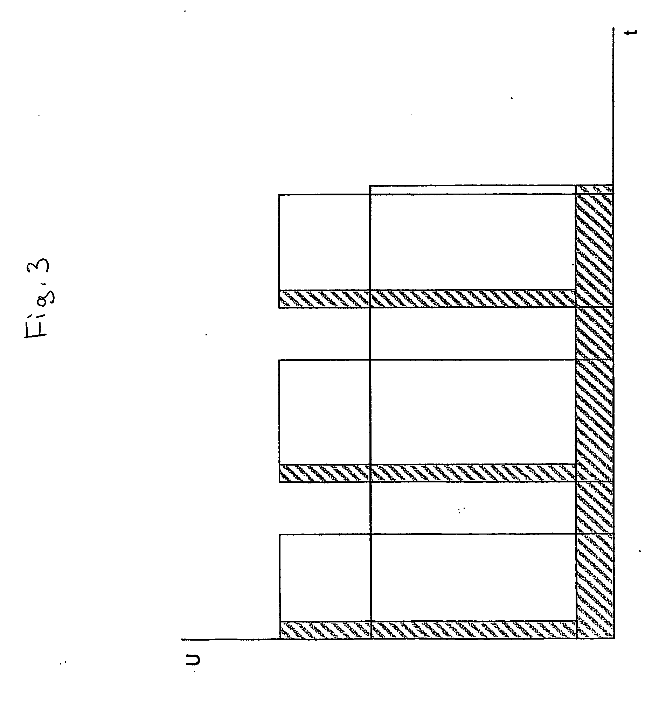

Der Emitter des Leistungstransistors 23 ist über eine in Sperr-Richtung geschaltete Diode 27 mit Masse verbunden. An dieser Diode 27 fällt die Ausgangsspannung der IGBT-Schaltung 22 ab. Diese Ausgangsspannung hat den in Figur 3 dargestellten zeitlichen Verlauf: Es handelt sich um Rechteckimpulse, deren Wiederholfrequenz der Wiederholfrequenz des Oszillators 24 der IGBT-Schaltung 22 entspricht und deren Breite über den Steueranschluß 25 der IGBT-Schaltung verändert werden kann. Die Amplitude dieser Spannungsimpulse ist durch die Eingangsspannung des Transformators 6 sowie die Auslegung der Sekundärwicklung 6A bestimmt.

Die in Figur 3 dargestellten Ausgangsimpulse der IGBT-Schaltung 22 werden durch ein LC-Glied geglättet, das eine Drossel 28 und einen Kondensator 29 umfasst. Das LC-Glied ist auf die Wiederholfrequenz des Oszillators 24 und damit der Ausgangsimpulse der IGBT-Schaltung 22 abgestimmt. Da die Wiederholfrequenz dieser Ausgangsimpulse, wie oben schon erwähnt, verhältnismäßig hoch liegt, kann eine sehr gute Glättung bereits mit verhältnismäßig kleinen Drosseln 28 und kleinen Kapazitäten 29 erzielt werden.

Die Ausgangsspannung der Stromversorgungseinheit 5A, die an den Klemmen 30 erscheint, ist damit sehr weitgehend frei von Restwelligkeit; diese lässt sich ohne weiteres unter ca. 1 % drücken. Zudem ist der cos Φ der beschriebenen Stromversorgungseinheit 5A sehr viel kleiner als dies bei bekannten, mit steuerbaren Thyristorbrücken arbeitenden Stromversorgungseinheiten der Fall war. Ergebnis ist ein besseres Beschichtungsresultat mit geringerer Oberflächenrauhigkeit.

In Figur 3 sind beispielhaft zwei Impulsfolgen mit unterschiedlicher Impulsbreite dargestellt, wie sie an der Diode 27 anliegen, sowie die zugehörigen geglätteten Spannungen, wie sie an den Klemmen 30 der Schaltungsanordnung der Figur 2 erscheinen.

Die Stromversorgungseinheiten 5A, 5B, 5C können sowohl strom- als auch spannungsgeregelt arbeiten.

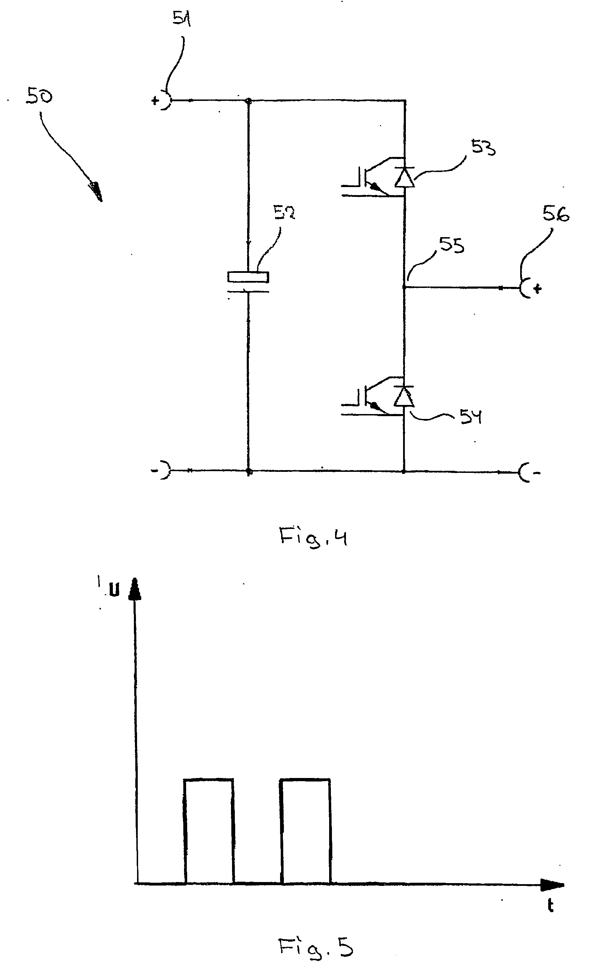

Bessere Lackierergebnisse als bisher bekannt werden in Hohlkörpern erzielt, wenn die Ausgangsspannung der Stromversorgungseinheiten 5A, 5B und 5C nicht direkt an den zu lackierenden Gegenstand gelegt sondern zunächst einem Impulsformer 50 zugeführt wird, wie er in Figur 4 dargestellt. Dieser erzeugt aus der geglätteten Ausgangsspannung an den Klemmen 30 der Stromversogungseinheit 5A bzw. 5B und 5C eine Rechteckimpulsfolge mit einer Wiederholfrequenz, die normalerweise im Bereich zwischen 1 und 10 kHz, bevorzugt bei 5kHz, liegt.

Der in Figur 4 dargestellte Impulsformer 50 ist grundsätzlich bekannt. Er umfaßt einen dem Eingang 51 parallelgeschalteten Kondensator 52 sowie eine diesem wiederum parallelgeschaltete Serienschaltung aus zwei IGBT-Transistoren 53 und 54, die mit der gewünschten Frequenz der Rechteckimpulsfolge gegensinnig angesteuert werden. Diese Rechteckimpulse können zwischen den beiden IGBT-Transistoren 53, 54 am Punkt 55 abgegriffen werden und erscheinen an den Ausgangsklemmen des Impulsformers 50 in der in Figur 5 dargestellten Form.

Bei Verwendung des Impulsformers 50 wird die zugehörige Stromversorgungseinheit 5A, 5B, 5C im Regelfalle stromgeregelt, wobei jedoch eine Begrenzung auf eine maximale Spannung erfolgt, um Spannungsüberschläge am Werkstück zu vermeiden.

## Patentansprüche

1. Elektrophoretische Tauchlackieranlage mit
a) mindestens einem Tauchbecken, welches mit einer Lackflüssigkeit füllbar und in welches ein zu lackierender Gegenstand eintauchbar ist;
b) mindestens einer im Tauchbecken angeordneten Elektrode einer ersten Polarität;
c) mindestens einer Stromversorgungseinheit, die aus einer Wechselspannung eine Gleichspannung mit einer bestimmten Restwelligkeit erzeugt, deren einer Pol mit der Elektrode der ersten Polarität und deren anderer Pol mit dem zu lackierenden Gegenstand verbindbar ist und die ein Glättungsglied zur Verringerung der Restwelligkeit aufweist;
**dadurch gekennzeichnet, daß**
d) die Stromversorgungseinheit (5) umfasst:
da) eine ungesteuerte Dioden-Gleichrichterbrücke (19) ;
db) eine IGBT-Schaltung (22), die ihrerseits einen
steuerbaren Oszillator (24), der mit einer Wiederholfreqzenz im Bereich zwischen 5 und 30 kHz Impulse mit variabler Impulsbreite erzeugt, sowie einen von den Impulsen des Oszillators (24) angesteuerten Leistungstransistor (23) aufweist.

2. Elektrophoretische Tauchlackieranlage nach Anspruch 1,
**dadurch gekennzeichnet, daß** die Wiederholfrequenz des Oszillators (24) etwa 20 kHz beträgt.

3. Elektrophoretische Tauchlackieranlage nach Anspruch 1 oder 2, **dadurch gekennzeichnet, daß** die Dioden-Gleichrichterbrücke (19) sechs Dioden (20) zur Vollwellen-Gleichrichtung der drei Phasen eines Drehstromes aufweist.

4. Elektrophoretische Tauchlackieranlage nach einem der
vorhergehenden Ansprüche, bei welcher die Gegenstände mittels eines Fördersystemes durch das Tauchbecken bewegbar sind, **dadurch gekennzeichnet, daß** sie mehrere normalerweise galvanisch voneinander getrennte, in Förderrichtung hintereinander liegende Bereiche (A, B, C) umfasst, die jeweils eine Stromversorgungseinheit (5A, 5B, 5C), eine mit den Gegenständen in dem Bereich (A, B, C) in elektrischem Kontakt stehende und mit dem anderen Pol der Stromversorgungseinheit (5A, 5B, 5C) verbindbare Stromschiene (4A, 4B, 4C) und mindestens eine Elektrode der ersten Polarität (3A, 3B, 3C) aufweist.

5. Elektrophoretische Tauchlackieranlage nach Anspruch 4,
**dadurch gekennzeichnet, daß** die Stromschienen (4A,
4B, 4C) benachbarter Bereiche (A, B, C) beim Wechsel der Gegenstände von einer Stromschiene (4A, 4B, 4C) zur anderen elektrisch miteinander verbindbar sind.

6. Elektrophoretische Tauchlackieranlage nach Anspruch 4 oder 5, **dadurch gekennzeichnet, daß** jede Stromversorgungseinheit (5A, 5B, 5C) wahlweise mit jeder Elektrode der ersten Polarität (3A, 3B, 3C) in allen Bereichen (A, B, C) verbindbar ist.

7. Elektrophoretische Tauchlackieranlage nach einem
der vorhergehenden Ansprüche, **dadurch gekennzeichnet, daß** mindestens einer Stromversorgungseinheit (5A, 5B, 5C) ein Impulsformer (50) nachgeschaltet ist, der aus der geglätteten Ausgangsspannung der Stromversorgungseinheit (5A, 5B, 5C) eine Folge von Rechteckimpulsen erzeugt.

8. Elektrophoretische Tauchlackieranlage nach Anspruch 7, **dadurch gekennzeichnet, daß** die Wiederholfrequenz der Rechteckimpulse zwischen 1 und 10 kHz liegt.

9. Elektrophoretische Tauchlackieranlage nach Anspruch 8, **dadurch gekennzeichnet, daß** die Wiederholfrequenz der Rechteckimpulse bei 5 kHz liegt.

## Claims

1. Electrophoretic dip painting installation, comprising:
a) at least one dip painting bath which can be filled with a paint liquid and in which an object to be painted can be dipped;
b) at least one electrode having a first polarity arranged in the dip paint bath;
c) at least one power supply unit which generates from an alternating voltage a direct voltage having a given residual ripple, one pole of which power supply unit is connectable to the electrode having the first polarity and the other pole of which is connectable to the object to be painted, and which includes a smoothing element for reducing the residual ripple,
**characterised in that**
d) the power supply unit (5) includes:
da) an uncontrolled diode rectifier
bridge (19);
db) an IGBT circuit (22) which in turn includes a controllable oscillator (24) which, with a repetition frequency in the range from 5 to 30 kHz, generates pulses of variable width, and a power transistor (23) activated by the pulses of the oscillator (24).

2. Electrophoretic dip painting installation according to claim 1, **characterised in that** the repetition frequency of the oscillator (24) is approximately 20 kHz.

3. Electrophoretic dip painting installation according to claim 1 or 2, **characterised in that** the diode rectifier bridge (19) includes six diodes (20) for full-wave rectification of the three phases of a three-phase current.

4. Electrophoretic dip painting installation according to any one of the preceding claims, in which the objects can be moved through the dip paint bath by means of a conveyor system, **characterised in that** it includes a plurality of zones (A, B, C) located one behind another in the conveying direction and normally separated galvanically from one another, each of which includes a power supply unit (5A, 5B, 5C), a current bar (4A, 4B, 4C) which is in electrical contact with the objects in the zone (A, B, C) and is connectable to the other pole of the power supply unit (5A, 5B, 5C), and at least one electrode having the first polarity (3A, 3B, 3C).

5. Electrophoretic dip painting installation according to claim 4, **characterised in that** the current bars (4A, 4B, 4C) of neighbouring zones (A, B, C) are electrically connectable to one another during the transfer of the objects from one current bar (4A, 4B, 4C) to the other.

6. Electrophoretic dip painting installation according to claim 4 or 5, **characterised in that** each power supply unit (5A, 5B, 5C) is optionally connectable to each electrode having the first polarity (3A, 3B, 3C) in all the zones (A, B, C).

7. Electrophoretic dip painting installation according to any one of the preceding claims, **characterised in that** a pulse shaper (50) is connected to the output of at least one power supply unit (5A, 5B, 5C), which pulse shaper (50) generates a succession of rectangular pulses from the smoothed output voltage of the power supply unit (5A, 5B, 5C).

8. Electrophoretic dip painting installation according to claim 7, **characterised in that** the repetition frequency of the rectangular pulses is between 1 and 10 kHz.

9. Electrophoretic dip painting installation according to claim 8, **characterised in that** the repetition frequency of the rectangular pulses is at or close to 5 kHz.

## Revendications

1. Installation de peinture électrophorétique par immersion comprenant
a) au moins un bassin d'immersion qui peut être rempli d'une peinture liquide et dans lequel un objet à peindre peut être plongé ;
b) au moins une électrode d'une première polarité disposée dans le bassin d'immersion ;
c) au moins une unité d'alimentation en courant qui, à partir d'une tension alternative, génère une tension continue avec une ondulation résiduelle, dont un pôle peut être relié à l'électrode de première polarité et l'autre pôle à l'objet à peindre et qui présente un élément de lissage pour diminuer l'ondulation résiduelle ;
**caractérisée en ce que**
d) l'unité d'alimentation en courant (5) comprend :
da) un pont redresseur à diodes non commandé (19) ;
db) un circuit IGBT (22) qui présente pour sa part un oscillateur commandable (24), qui génère des impulsions de largeur variable à une fréquence de répétition comprise entre 5 et 30 kHz, ainsi qu'un transistor de puissance (23) commandé par les impulsions de l'oscillateur (24).

2. Installation de peinture électrophorétique par immersion selon la revendication 1, **caractérisée en ce que** la fréquence de répétition de l'oscillateur (24) est d'environ 20 kHz.

3. Installation de peinture électrophorétique par immersion selon la revendication 1 ou 2, **caractérisée en ce que** le pont redresseur à diodes (19) présente six diodes (20) pour le redressement pleine onde des trois phases d'un courant triphasé.

4. Installation de peinture électrophorétique par immersion selon une des revendications précédentes, dans laquelle les objets peuvent être déplacés à travers le bassin d'immersion au moyen d'un système de transport, **caractérisée en ce qu'**elle comprend plusieurs zones (A, B, C) situées l'une derrière l'autre dans la direction de transport, normalement isolées électriquement les unes des autres, qui présentent chacune une unité d'alimentation en courant (5A, 5B, 5C), un rail conducteur (4A, 4B, 4C) en contact électrique avec les objets dans la zone (A, B, C) et pouvant être relié à l'autre pôle de l'unité d'alimentation en courant (5A, 5B, 5C), et au moins une électrode de première polarité (3A, 3B, 3C).

5. Installation de peinture électrophorétique par immersion selon la revendication 4, **caractérisée en ce que** les rails conducteurs (4A, 4B, 4C) de zones voisines (A, B, C) peuvent être reliés entre eux électriquement lors du passage des objets d'un rail conducteur (4A, 4B, 4C) à l'autre.

6. Installation de peinture électrophorétique par immersion selon la revendication 4 ou 5, **caractérisée en ce que** chaque unité d'alimentation en courant (5A, 5B, 5C) peut être reliée au choix à chaque électrode de première polarité (3A, 3B, 3C) dans toutes les zones (A, B, C).

7. Installation de peinture électrophorétique par immersion selon une des revendications précédentes, **caractérisée en ce qu'**à la suite d'au moins une unité d'alimentation en courant (5A, 5B, 5C) est branché un générateur d'impulsions (50) qui génère une suite d'impulsions rectangulaires à partir de la tension de sortie lissée de l'unité d'alimentation en courant (5A, 5B, 5C).

8. Installation de peinture électrophorétique par immersion selon la revendication 7, **caractérisée en ce que** la fréquence de répétition des impulsions rectangulaires est comprise entre 1 et 10 kHz.

9. Installation de peinture électrophorétique par immersion selon la revendication 8, **caractérisée en ce que** la fréquence de répétition des impulsions rectangulaires est de 5 kHz
